# EUROPÄISCHE PATENTANMELDUNG

(11) **EP 0 573 735 A2**
(43) Veröffentlichungstag der Anmeldung: **15.12.1993**
(21) Anmeldenummer: 93101921.0
(22) Anmeldetag: 08.02.1993
(51) Int. Cl.: H04Q 11/04, H04M 11/06, H04M 3/22

(54) **Umsetzadapter zum Erfassen von Signalisierungsdaten in einer Upo-Schnittstelle eines ISDN-Netzes**

(30) Priorität: 14.05.1992 DE 4215945
(71) Anmelder: ROBERT BOSCH GMBH, 70442 Stuttgart (DE)
(72) Erfinder: Freisleben, Walter, W-6368 Bad Vilbel 3 (DE); Vanegas-Dorn, Jesus Ernesto, Col. Lomas Karike Chihuahua Chih. (MX)

(57) **Zusammenfassung**

Den Umsetz-Adapter (UA), wird in die Upo-Übertragungsstrecke eingeschleift. Am Umsetz-Adapter ist eine Steckvorrichtung vorgesehen, worüber die gesendeten und empfangenen Signalisierungsdaten nach Richtungen getrennt einer Anzeigeeinrichtung angeboten werden. Innerhalb des Umsetz-Adapters befinden sich integrierte Schaltkreise (IBCE, IBCV), die in verschiedenen Betriebsmodi arbeiten. Es ist außerdem ein Code-Erkenner (CE) vorgesehen, der mindestens einen besonderen Code erkennt, der von einem der Schaltkreise (IBCE, IBCV) empfangen wird und den jeweils anderen Schaltkreis (IBCV, IBCE) in eine vom Normalbetrieb abweichende Betriebsart bringen würde, und diesen Code dann verändert, um den Normalbetrieb beizubehalten,

Mit einer Anzeigeeinrichtung oder einem einfachen Datensichtgerät, welches am Umsetz-Adapter angeschlossen wird, können die einzelnen Befehle, die sich beim Aufbauen oder Abbauen einer Verbindung ergeben und im Signalisierungskanal ausgetauscht werden, dargestellt werden. Der Umsetz-Adapter kann auch ohne den Anschluß einer Anzeigeeinrichtung in eine Upo-Übertragungsstrecke eingeschleift werden und dient dann als Regenerator oder Signalwiederholung zur Erhöhung der Reichweite dieser Übertragungsstrecke.

## Beschreibung

Die Erfindung betrifft eine Schaltungsanordnung für eine Upo-Schnittstelle des Dienste integrierenden Digitalnetzes ISDN nach dem Oberbegriff des Patentanspruchs 1.

In der Deutschen Fachzeitschrift "TN-Nachrichten" 1986, Heft 89, ist ab Seite 28 ein Aufsatz abgedruckt mit dem Titel: "ISDN-Schnittstellen in Teilnehmerabschlußbereich." Es ist dort im einzelnen beschrieben, welche digitale Anschlußtechnik im ISDN angewendet wird. Auf Seite 29 sind die Prinzipschaltbilder für die einzelnen Übertragungsverfahren dargestellt. Bei einem Vierdrahtverfahren verlaufen die Übertragungsrichtungen auf getrennten Aderpaaren, so daß sich eine vierdrähtige Anschlußtechnik ergibt. Diese Vierdrahttechnik wird bei der sogenannten So-Schnittstelle im ISDN angewendet. Unter der Bezeichnung Upo ist eine Zweidrahttechnik für das ISDN genormt, welche nach dem Zeitgetrenntlage-Verfahren arbeitet. Die Eigenschaften einer dafür vorhandenen Upo-Schnittstelle sind ab Seite 32 beschrieben. Die Übertragung der Nutzdaten und der Signalisierungsdaten erfolgt durch sogenannte Bursts, welche in definierten Zeitabständen übertragen werden und aus seriell gesendeten und empfangenen Bitmustern bestehen.

Ab Seite 34 ist näher erläutert, auf welche Weise diese Schnittstellen mit hochintegrierten Schaltkreisen realisiert werden können. Im Rahmen des vorgenannten Aufsatzes sind nur die Funktionen als solche beschrieben, ohne daß angegeben ist, auf welche Weise eine Funktionsprüfung stattfinden kann, um eine Fehlerdiagnose während des Betriebs zu ermöglichen.

Ein Aufsatz mit dem Titel: "Höhere Effizienz in Datennetzen" ist in der DE-Fachzeitschrift: nachrichten elektronik + telematik 37 (1983) Heft 6, ab Seite 238 abgedruckt. Im Bild 2 auf Seite 239 ist angegeben, wie ein sogenannter Protokollanalysator an Datenübertragungsstrecken angeschlossen werden kann, um eine Fehlerortung zu ermöglichen. Der Anschluß eines Protokoll-Analysators, wie es im oberen Teil des Bildes dargestellt ist, wäre auch bei einer vierdrähtig betriebenen So-Schnittstelle im ISDN möglich. Damit oder mit einem speziell dafür ausgelegten Meßgerät könnte festgestellt werden, welche Signalisierungsdaten auf dem dafür vorgesehenen Signalisierungskanal D gesendet oder empfangen werden. Bei einer derartigen parallelen Anschaltung ist es nicht notwendig, die Übertragungsstrecke aufzutrennen, so daß der auf einer Übertragungsrichtung stattfindende Datenverkehr beobachtet werden kann.

Ein derart einfache Anschaltung ist bei der Untersuchung einer Upo-Schnittstelle nicht ohne weiteres möglich, da diese Schnittstelle zweidrähtig ausgelegt ist und nach dem Zeitgetrenntlage-Verfahren arbeitet. Um einen Protokollanalysator oder ein anderes Datensichtgerät anschließen zu können, müßten besondere Schaltmaßnahmen an der Upo-Schnittstelle vorgenommen werden.

Die Aufgabe der Erfindung besteht darin, eine Schaltungsanordnung anzugeben, die den Anschluß eines einfachen Datensichtgerätes zum Zweck der Beobachtung des Austausches von Signalisierungsdaten an eine Upo-Schnittstelle ermöglicht. Bei dieser Schaltungsanordnung sollen nach Möglichkeit die für eine ISDN-Schnittstelle genormten hochintegrierten Schaltkreise angewendet werden, so daß sich eine preiswerte Anschlußschnittstelle für den Betrieb eines Datensichtgerätes oder einer Anzeigeeinrichtung ergibt.

Zur Lösung dieser Aufgabe ist eine Merkmalskombination vorgesehen, wie sie im Patentanspruch 1 angegeben ist.

Damit wird in vorteilhafter Weise erreicht, daß ein handelsübliches Datensichtgerät z.B. mit einem Bildschirm als Anzeigeeinrichtung für Meß- und Überwachungszwecke an eine Upo-Schnittstelle angeschlossen werden kann. Die Anschlüsse des dafür verwendeten Umsetz-Adapters sind so ausgelegt, daß vorhandene Steckvorrichtungen benutzt werden können, ohne daß Schaltarbeiten bei einem Prüfvorgang notwendig sind.

Weiterbildungen der Erfindung ergeben sich aus den Unteransprüchen. So ist es beispielsweise möglich, den Umsetz-Adapter auch ohne Benutzung der Anschlüsse für eine Meß- und Prüfeinrichtung in eine Upo-Übertragungsstrecke einzuschleifen, um deren Reichweite zu vergrößern.

Ein Ausführungsbeispiel der Erfindung wird nachfolgend anhand von Zeichnungen näher erläutert.

Es zeigt
- Figur 1: das Einschleifen eines Umsetz-Adapters zwischen einer Anschlußdose und einem Endgerät bei einer Upo-Schnittstelle.
- Figur 2: das Blockschaltbild eines Umsetz-Adapters
- Figur 3: das Prinzipschaltbild eines Codeerkenners
- Figur 4: ein Zeitdiagramm für den Codeerkenner

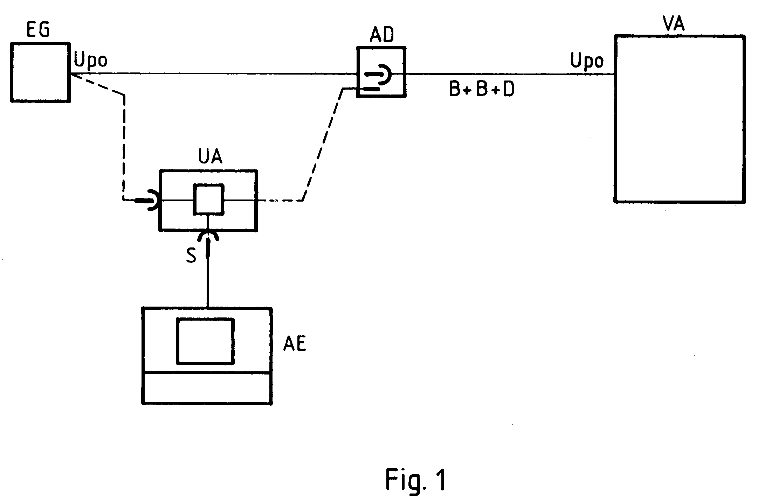

In der Figur 1 ist schematisch dargestellt, wie eine Anzeigeeinrichtung AE zum Zweck der Funktionsprüfung an eine Upo-Übertragungsstrecke angeschlossen werden kann. Für den Anschluß der Anzeigeeinrichtung AE, wobei es sich um ein handelsübliches Datensichtgerät handeln kann, ist ein Umsetz-Adapter UA vorgesehen. Dieser Umsetz-Adapter UA weist Steckvorrichtungen auf, womit er in eine Upo-Übertragungsstrecke eingefügt werden kann. Wie in der Figur 1 dargestellt ist, wird der Umsetz-Adapter UA mit einem Stecker in die Anschlußdose AD anstelle eines Endgerätes EG eingesteckt. Der Stecker des Endgerätes EG wird also aus der Anschlußdose AD entfernt und in eine gleichartige Steckvorrichtung des Umsetz-Adapters UA eingesteckt. Der Umsetz-Adapter UA enthält eine weitere Steckvorrichtung S, woran die Anzeigeeinrichtung angeschlossen wird. Wenn diese leicht durchzuführenden Maßnahmen abgeschlossen sind, so kann der Datenaustausch zwischen einem Endgerät EG und einer Vermittlungsanlage VA am Anzeigegerät AE beobachtet werden. Die seriell auszutauschenden Bitmuster insbesondere auf dem Signalisierungskanal können entweder bitweise zur Anzeige gebracht werden, oder mit Hilfe von geeigneten Programmen in Klartext angezeigt werden.

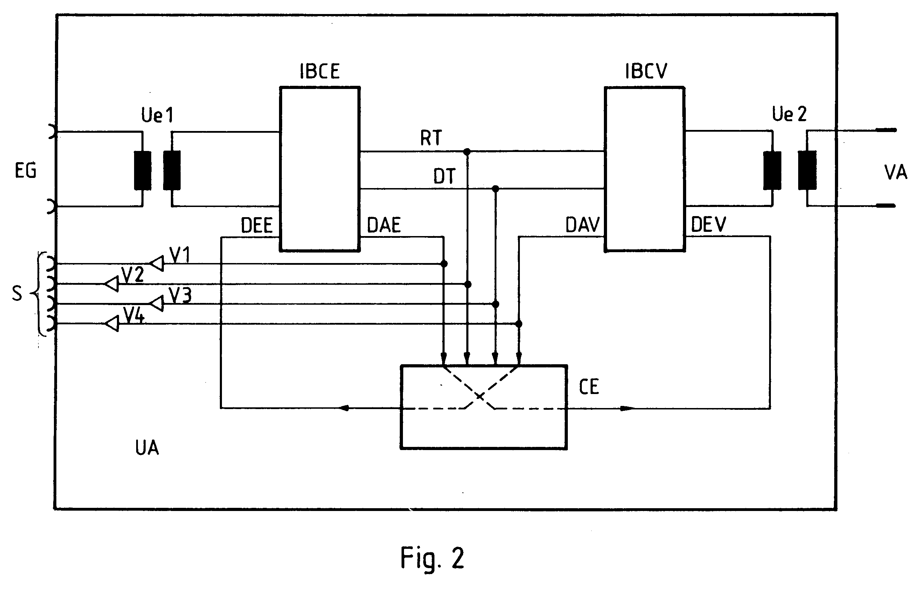

Die Figur 2 zeigt ein Blockschaltbild des Umsetz-Adapters UA. Wesentlicher Bestandteil dieses Umsetz-Adapters UA sind zwei hochintegrierte Schaltkreise mit den Bezeichnungen IBCE und IBCV. Die Buchstabenkombination IBC steht für den englischen Fachbegriff: " ISDN Burst Transceiver Circuit," wobei es sich beispielsweise um Schaltkreise mit der Typenbezeichnung PEB 2095 handeln kann. Die Leitungsseite des einen Schaltkreises IBCV ist über einen Abschlußübertrager Ue2 mit einem Stecker verbunden, welcher an die zur einer Vermittlungsanlage VA führende Leitungsseite angeschlossen werden muß. Der andere Schaltkreis IBCE ist mit seiner Leitungsseite ebenfalls über einen Übertrager Ue1 mit einer Steckvorrichtung verbunden, wo das zu einem Endgerät EG führende Ende der Übertragungsleitung anzuschließen ist.

Die von einem der Schaltkreise IBCV erzeugten Takte, nämlich der Rahmentakt RT und der Datentakt DT werden dem anderen Schaltkreis IBCE angeboten sowie einem Codeerkenner CE zugeführt. Außerdem sind diese Taktleitungen RT und DT über Verstärkerschaltungen V2 und V3 an die Steckeinrichtung S geführt, wo ein Datensichtgerät mit einer Anzeigeeinrichtung AE angeschlossen werden kann. Die jeweiligen Datenausgänge DAV und DAE der hochintegrierten Schaltkreise IBCV und IBCE sind mit dem Codeerkenner CE verbunden. Außerdem sind die genannten Ausgänge DAV und DAE über Verstärkerschaltungen V4 und V1 auf Buchsen der Steckeinrichtung S geführt.

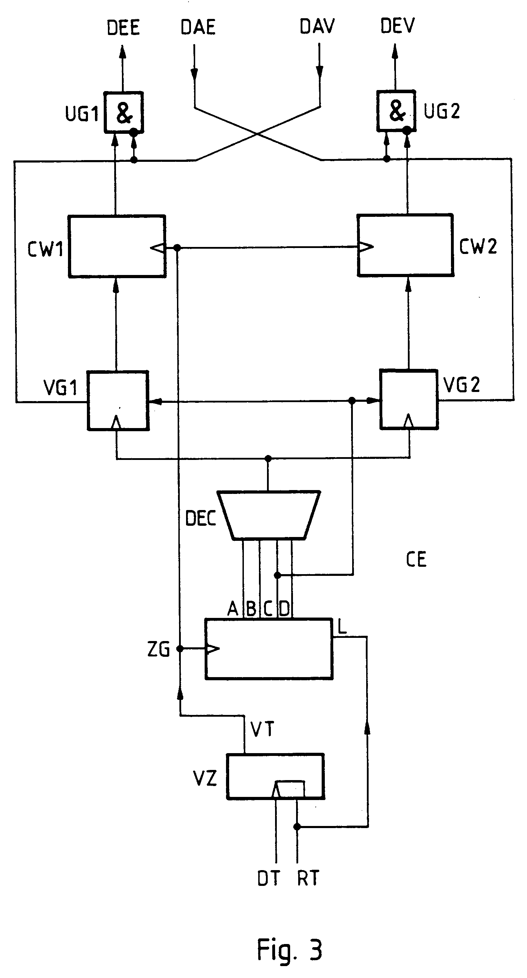

Innerhalb des Codeerkenners CE werden die Ausgangssignale der Datenausgänge DAV und DAE einer Logikanordnung zugeführt, welche in Figur 3 ausführlicher dargestellt ist. Die Ausgänge dieser Logikanordnung sind mit den Dateneingängen DEV und DEE der integrierten Schaltkreise IBCV und IBCE verbunden. Diese Verbindungen sind so geschaltet, daß die vom Datenausgang DAV des einen integrierten Schaltkreises IBCV kommenden Signale dem Dateneingang DEE des anderen integrierten Schaltkreises IBCE zugeführt werden. In umgekehrter Richtung gelangen die Ausgangssignale des Datenausgangs DAE des ersten Schaltkreises IBCE, zum Dateneingang DEV des anderen integrierten Schaltkreises IBCV. Diese kreuzweise Verbindung ist in der Zeichnung gestrichelt angedeutet.

Durch diese Verbindung der Datenausgänge DAV und DAE mit den jeweils anderen Dateneingängen DEE und DEV wird erreicht, daß der Datenaustausch beim Zeitgetrenntlage-Verfahren, wie es bei der Upo-Schnittstelle angewendet wird, weiterhin stattfinden kann. Durch eine nicht dargestellte äußere Beschaltung wird erreicht, daß die beiden integrierten Schaltkreise IBCV und IBCE in verschiedenen Betriebsmodi arbeiten. Dabei wird für den Schaltkreis IBCV, welcher auf der zur Vermittlungsanlage VA liegenden Seite sich befindet, der sogenannte NT-Modus eingestellt. Mit einer anderen Beschaltung des zweiten Schaltkreises IBCE, welcher an der zu einem Endgerät EG führenden Leitungsseite liegt, wird dieser auf einen sogenannten LT-Modus eingestellt. Damit sind die beiden integrierten Schaltkreise IBCV und IBCE in der Lage, bei der Beschaltung, wie sie zuvor beschrieben worden ist, so zusammenzuarbeiten, daß der Datenaustausch sowohl auf den Nutzdatenkanälen als auch auf den Signalisierungskanal stattfinden kann. Der Codeerkenner CE hat dabei die Aufgabe, mindestens einen besonderen Befehl im Signalisierungskanal zu erkennen. Dieser besondere Befehl dient bei andersartiger Anwendung der integrierten Schaltkreise IBCV und IBCE dazu, jeweils einen besonderen Betriebsmodus einzustellen. Dieser besondere Betriebsmodus würde bei dem hier vorliegenden Anwendungsfall dazu führen, daß eine Datenübertragung abgebrochen wird. Deshalb wird ein derartiger Befehl vom Codeerkenner CE erkannt und so abgewandelt, daß die vorgenannte Wirkung nicht eintreten kann.

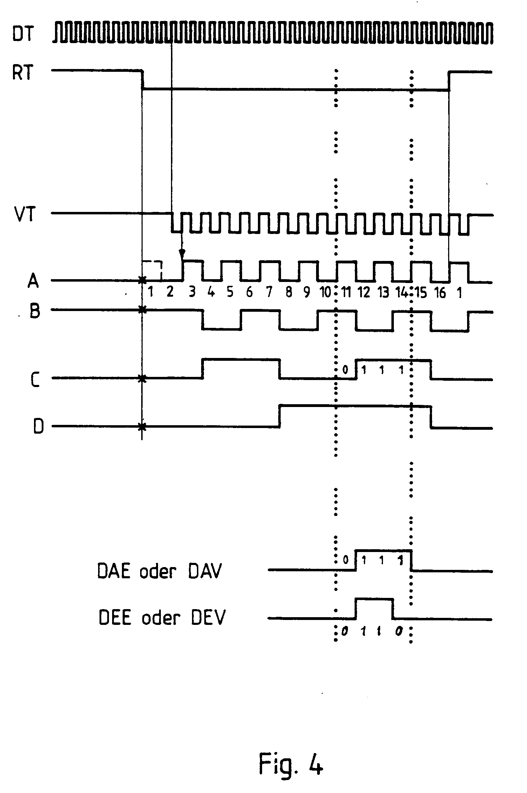

Ein mehr ins Detail gehendes Schaltbild dieses Codeerkenners CE ist in der Figur 3 dargestellt. Die Funktion dieser Schaltungsanordnung wird nun anhand des in Figur 4 dargestellten Zeitdiagramms näher beschrieben.

Es sei angenommen, daß eine bestimmte Bitkombination, z.B. 0111 erkannt werden soll, und daß diese dann in eine andere Bitkombination, z.B. 0110 umgewandelt werden soll. Um die zeitliche Lage einer derartigen Bitkombination bestimmen zu können, wird in einer Verzögerungseinrichtung VZ der Rahmentakt RT mit dem Datentakt DT verknüpft. Diese Verzögerungseinrichtung VZ kann aus einem mehrstufigen Schieberegister bestehen, wovon der Einfachheit halber nur eine Stufe dargestellt ist. Die Verzögerungseinrichtung VZ liefert einen Verzögerungstakt VT, welcher einem Zählgenerator ZG zugeführt wird. Dieser Zählgenerator ZG ist an seinem Ladeeingang L mit dem Rahmentakt RT beschaltet. Mit dem Erscheinen des Rahmentaktes RT wird deshalb der Zählgenerator ZG auf einen vorbestimmten Binärwert (z.B. 2) geladen. Mit dem Verzögerungstakt VT wird der Zählgenerator ZG weitergezählt, so daß bei einem vorbestimmten Binärwert ein Bitvergleich stattfinden kann. Zu diesem Zweck ist eine Decodierung DEC vorgesehen, welche einen Impuls an die beiden Vergleicher VG1 und VG2 abgibt, so daß diese ab diesem Zeitpunkt einen Bitvergleich durchführen können.

Durch diese Maßnahme wird exakt der Zeitpunkt vorgegeben, wo der zu erkennende Befehl in Form einer Bitkombination innerhalb eines Datenwortes sich befindet.

Ab diesem Zeitpunkt werden die von den Datenausgängen DAV und DAE kommenden Daten bitweise verglichen mit einem gleichartigen Bitmuster, welches am Zählgenerator (Ausgang C) abgenommen wird. In der Figur 4 ist dargestellt, daß für einen Zeitraum von 4 Bits (gestrichelt gezeichnet) der Kurvenverlauf des Signals am Ausgang C des Zählgenerators ZG übereinstimmt mit dem Kurvenverlauf des Signals an einem der Datenausgänge DAE oder DAV. Wenn durch einen der Vergleicher VG1 oder VG2 eine Übereinstimmung des jeweils empfangenen Bits mit dem Bitmuster des zu erkennenden Codes festgestellt wird, so erhält der betreffende Codewandler CW1 oder CW2 einen Impuls. Damit wird ein im Codewandler CW1 bzw. CW2 befindlicher Zähler jeweils um einen Schritt weiter gezählt. Beim Erreichen einer vorbestimmten Zählstellung gibt der jeweilige Codewandler CW1 bzw. CW2 ein Ausgangssignal ab, womit ein daran angeschlossenes UND-Gatter UG1 bzw. UG2 gesperrt wird. Dadurch entsteht am Ausgang des entsprechenden UND-Gatters UG1 bzw. UG2 ein logisches Null-Signal welches dann an den betreffenden Dateneingang DEE bzw. DEV gelangt.

Wenn also mit Hilfe des Zählgenerators ZG, der Decodierung DEC durch die Vergleicher VG1 bzw. VG2 festgestellt wird, daß ab Beginn des zur Beobachtung vorgegebenen Zeitraums 3 Bits (011) übereinstimmen, so wird das vierte Bit zwangsweise auf Null gesetzt. Dies geschieht durch die Codewandler CW1 bzw. CW2 und hat zur Folge, daß den Dateneingängen DEE bzw. DEV der integrierten schaltkreise IBCE bzw. IBCV eine abgeänderte Befehlsstruktur angeboten wird. Damit wird verhindert, daß die integrierten Schaltkreise IBCE bzw. IBCV in einen Arbeitsmodus gelangen, der eine weitere Datenübertragung verhindert.

Die hier beschriebene Schaltungsanordnung des Codeerkenners CE ist für einen Anwendungsfall in der beschriebenen Weise konzipiert. Falls der zu eliminierende Befehl aus einer anders gearteten Bitkombination besteht, so kann zwar das Prinzip beibehalten werden, jedoch müssen die Logikanordnungen und ihre Beschaltung entsprechend anders ausgelegt werden. Das hier beschriebene Beispiel, wobei der Befehl aus 4 Bit besteht, ist nicht unbedingt auf diese Bitzahl beschränkt. Mit einer entsprechenden Auslegung der in den Codewandlern CW1 bzw. CW2 vorhandenen Zählern können auch Befehlsstrukturen erkannt werden, die aus mehr als 4 Bit bestehen. Wie zuvor schon beschrieben worden ist, muß die zeitliche Lage des vom Codeerkenner CE zu erkennenden Befehls innerhalb des Datenstroms bekannt sein, damit der zeitliche Einsatz für den Codeerkenner CE richtig bestimmt werden kann.

Wenn der Umsetz-Adapter UA in eine Upo-Übertragungsstrecke so eingefügt worden ist, wie dies in Figur 1 dargestellt ist, so lassen sich damit zwei Betriebweisen realisieren. Zum ersten kann der Umsetz-Adapter UA über die Steckvorrichtung S mit einem Datensichtgerät, d.h. mit einer Anzeigeeinrichtung AE verbunden werden. Somit können alle von einem Endgerät EG ausgehenden und empfangenen Befehle beobachtet und interpretiert werden, die beim Aufbauen oder Abbauen einer Verbindung zwischen einer Vermittlungsanlage VA und einem Endgerät EG im Signalisierungskanal des ISDN ausgetauscht werden.

Der Umsetz-Adapter UA kann jedoch auch ohne den Anschluß einer Anzeigeeinrichtung betrieben werden und an einer geeigneten Stelle in die Upo-Übertragungsstrecke eingebracht werden. Mit einer geeigneten Stromversorgung entweder aus dem Netz oder über die Anschlußleitung kann dann der Umsetz-Adapter als Regenerator, bzw. Signalwiederholer fungieren, womit die Reichweite der Übertragungsstrecke erhöht wird.

## Patentansprüche

1. Schaltungsanordnung für eine Upo-Schnittstelle des Dienste integrierenden Digitalnetzes ISDN, die über zwei Anschlußadern nach dem Zeit-Getrenntlage-Verfahren betrieben wird, wobei zwei Nutzdatenkanäle und ein Signalierungskanal zur Verfügung stehen, in denen der Informationsaustausch in Form von gesendeten und empfangenen Bursts stattfindet und eine vorgegebene Reichweite überbrückt wird, und wobei in dieser Schnittstelle hochintegrierte elektronische Schaltkreise angewendet werden, die für verschiedene Betriebsarten einstellbar sind, welche auch Prüfprozeduren enthalten,
dadurch gekennzeichnet,
daß innerhalb eines Umsetz-Adapters (UA) welcher in eine Upo-Übertragungsstrecke eingeschleift wird, zwei integrierte Schaltkreise (IBC) zusammengeschaltet sind, wovon der eine (IBCE) in einem ersten Modus (LT) betrieben wird und der andere (IBCV) in einem zweiten Modus (NT) arbeitet,
daß die Anschlüsse der Schaltkreise (IBCE, IBCV) für die Taktleitungen (RT, DT) direkt miteinander verbunden sind,
daß die Datenausgänge (DAE, DAV) der Schaltkreise (IBCE, IBCV) zu einem Code-Erkenner (CE) geführt sind und über diesen mit jeweils dem Dateneingang (DEV, DEE) des anderen Schaltkreises (IBCV, IBCE) verbunden sind,
daß der Code-Erkenner (CE) mindestens einen besonderen Code erkennt, der von einem der Schaltkreise (IBCE, IBCV) empfangen wird und den jeweils anderen Schaltkreis (IBCV, IBCE) in eine vom Normalbetrieb abweichende Betriebsart bringen würde, und diesen Code dann verändert, um den Normalbetrieb beizubehalten,
und daß die Datenausgänge (DAE, DAV) der Schaltkreise (IBCE, IBCV) und die Taktleitungen (RT, DT) auf eine Steckvorrichtung (S) geführt sind, woran eine Anzeige-Einrichtung (AE) anschließbar ist, die zum Anzeigen des auf dem Signalisierungskanal (D) ablaufenden Informationsaustausches dient.

2. Schaltungsanordnung nach Anspruch 1,
dadurch gekennzeichnet,
daß der Umsetz-Adapter (UA) ohne Benutzung der Steckvorrichtung (S) als Regenerator, bzw. Signalwiederholer in eine Upo-Übertragungsstrecke einfügbar ist, womit deren Reichweite erhöht wird.

3. Schaltungsanordnung nach Anspruch 2,
dadurch gekennzeichnet,
daß der Umsetz-Adapter (UA) über die Anschlußleitung mit Strom versorgt wird, wenn er als Regenerator, bzw. Signalwiederholer eingesetzt wird.

4. Schaltungsanordnung nach Anspruch 1,
dadurch gekennzeichnet,
daß der Code-Erkenner (CE) aus einem Zählgenerator (ZG) besteht, der einen zu erkennenden Code erzeugt und diesen einem Vergleicher (VG1 bzw. VG2) anbietet,
und daß beim Erkennen einer Übereinstimmung dieses Codes mit einem empfangenen Code ein Codewandler (CW1, bzw. CW2) anspricht und einen veränderten Code zum jeweiligen Dateneingang (DEV, DEE) weitergibt.

5. Schaltungsanordnung nach Anspruch 4,
dadurch gekennzeichnet,
daß der Zählgenerator (ZG) beim Erscheinen eines Rahmentaktes (RT) mit einem Binärwert geladen wird, wodurch die zeitliche Lage des zu erkennenden Codes innerhalb des seriellen Bitstroms mit Hilfe eines Decoders (DEC) definiert wird.

6. Schaltungsanordnung nach Anspruch 4,
dadurch gekennezeichnet,
daß die Codewandler (CW1, bzw. CW2) aus Zählern bestehen, welche beim Auftreten jeweils gleichartiger Bits weitergeschaltet werden und beim Erreichen eines bestimmten Binärwertes eine Codewandlung vornehmen, indem mindestens ein Bit unterdrückt, bzw. verändert wird.
